# EUROPEAN PATENT SPECIFICATION

(11) **EP 3 158 147 B1**
(45) Date of publication and mention of the grant of the patent: **27.04.2022**
(21) Application number: 14894885.4
(22) Date of filing: 18.06.2014
(51) Int. Cl.: E04B 1/84, E04H 9/02, F16F 1/373, E04B 1/82, G10K 11/16

(54) **BUILDING STRUCTURAL CONNECTOR**
STRUKTURELLER VERBINDER FÜR GEBÄUDE
CONNECTEUR STRUCTUREL DE CONSTRUCTION

(43) Date of publication of application: 26.04.2017
(73) Proprietor: Case, Alan, Braintree, MA 02184 (US)
(72) Inventor: Case, Alan, Braintree, MA 02184 (US)
(74) Representative: Pedersen, Tenna Marian
(86) International application number: PCT/US2014/042960
(87) International publication number: WO 2015/195119

(56) References cited:
- FR-A- 904 850
- FR-A1- 2 899 259
- US-A- 1 195 289
- US-A- 3 598 026
- US-A- 4 227 359
- US-A- 4 338 758
- US-A- 4 525 081
- US-A- 5 054 251
- US-A- 5 054 251
- US-A1- 2004 168 377
- US-A1- 2006 254 997

## Description

### BACKGROUND OF THE INVENTION

### Field of the Invention

The present invention relates generally to building construction. More particularly the present invention relates to a vibration damping, sound isolating, structural connector to connect various building elements to aid in sound proofing and noise reduction.

### Description of Related Art

In the field of vibration damping products, a common solution is the composite type of vibration damping materials comprising a metal sheet and a viscoelastic polymeric material. One example of such a vibration damper is formed of a thin steel sheet and a rubber or synthetic resin-based viscoelastic polymeric layer bonded to both sides thereof, and another vibration damper formed by sandwiching and bonding a viscoelastic polymeric layer between two steel sheets.

Said composite type of vibration dampers are used in a wide range of industrial fields such as automotive engine mounts, disc brakes, oil pans, transmissions, compressors, air cleaners, brake clutches, electronic ranges, speakers and players. However, the vibration dampers of the prior art are not structurally capable of supporting large or complex loads or resisting specific significant forces, such as those experienced during building construction.

Other sound-proofing systems include the use of substantial insulation, and specially designed building materials. Both of these systems are costly, and can be difficult to install. Further, these existing approaches to sound proofing are generally topical applications that merely muffle sound on the surface. Structural elements are not used in sound-proofing systems.

Cavity insulation decreases airborne sound transmission but has no effect on structure borne sound such as impact noise that travels a direct path through very dense materials.

Another approach involves staggered stud walls, which are actually double studded walls whereby the opposing wall finishes do not share fastening to common studs. This practice only partially controls sound transmission as both studs walls are attached to the same top and bottom plates allowing for wall impacts to travel up into the ceiling plane and down through the floor system. Attempts are also made to control noise by adding extra layers of sheetrock or installing sheets of mass-loaded vinyl between sheets of sheetrock. Again, these features fail in preventing structural transmission of sounds, and merely muffle some sound transmission.

Examples of isolators are described in, e.g., US 2006/0254997, FR 2 899 259, FR 904 850, and US 3,598,026. US 2006/0254997 relates to a storage rack vibration isolator installed on a floor, said insulator comprising a first mounting plate connectable to the storage rack system, and a second mounting plate connectable to the floor. An elastomeric component extends between the mounting plates. The storage rack system comprising the isolator is used for absorbing and dissipating seismic vibrations, which could cause damage to the storage rack or cause stored items to fall off with the risk of injuring people. FR 2 899 259 disclose a sandwich panel comprising a facing element and a layer of insulating material, where the facing element comprises a facing plate and spacing means, whereby the facing plate is kept at a distance from the insulating material to form a space devoid of insulating material. The facing element has anchoring means for adhering to the insulating material. The sandwich panel are used in buildings and constructing industry and for forming partitions, claddings, roof constructions and floors, where thermal and acoustic insulation properties are desired. FR 904 850 relates to a rubber ad metal shock absorber for elastic support of a combustion engine. The absorber comprises reinforcing structures on the element adhering to the rubber of two metal fixing plates, the reinforcing structures extending over the entire length of the elastic body. The reinforcing structures are offset from one another so that their edges are located one above the other. US 3,598,026 relates to a joint-sealing device, where an anchor is fixed to each side of the joint, and where each anchor presents confronting abutments having an upper cavity and a lower cavity inside the joint and further a compressible, resilient, elastic sealing member seated between the abutments or providing a watertight seal. However, none of the described isolators are suitable for withstanding heavy loads from a building or during building construction.

Other approaches to provide damping is used when protecting buildings against, e.g., earthquakes. E.g., from US 5,054,251 A, a structural shock isolation system for use in building structures as well as in other applications requiring load supporting elements is known. The elements of the system are divided into a plurality of parts keyed together with the respective parts separated by an elastomeric material. Thereby, each individual element of the system provides shock and vibration isolation and further the parts act as a whole in each structure to provide required design strength for the system. The layer of elastomeric material is positioned between and in contact with the donor and receptor plates to maintain the plates separated. The plates are formed with interlocking cross-sectional configurations with respect to each other to form a keyed layered structure with the keyed donor and receptor plates separated by the elastomeric material to provide a shear and uplift proof intermediate element between the foundation and the major structural component. Seismic motions, wind vortexes, impacts or imbalanced machine forces are dampened and dissipated by the elastomeric layer for the purpose of mitigating the effects of severe events like earthquakes.

Therefore, what is needed is a device that may provide adequate vibration damping that is also capable of being an integral part of a building structure, and capable of withstanding heavy loads such as those experienced in a building and during building construction.

### SUMMARY OF THE INVENTION

The subject matter of this application involve, in some cases, interrelated products, alternative solutions to a particular problem, and/or a plurality of different uses of a single system or article.

In one aspect, a structure comprising a first structural element, a second structural element and a structural connector for joining structural elements of a building together is provided. The structural connector comprises two sheets bonded together by a vibration damping material. The two sheets are opposing each other and have a solid piece of visco-elastic sound-attenuating vibration damping material between them, such that no part of the first sheet is in contact with the second sheet, the vibration damping material extending along the inner surface of the first sheet. The first sheet further comprises an extended portion extending away from the vibration damping material along a plane parallel to the lateral plane of the vibration damping material, and the first the fist sheet is attached to the first structural element by a fastener connected to the extended portion. The second sheet is attached to the second structural element. A plurality of channels extends into the inner surface of each of the first sheet and second sheet. The vibration damping material extends into each channel such that the sheets do not form any mutually interlocking structures. Opposing channels are partially aligned and are formed as dovetail. A reinforcing structure may protrude from one or both of the sheets into the vibration damping material.

Methods of using the structural connector are envisaged. In one embodiment a method of soundproofing a room during construction of the room is provided. The method involves connecting a plurality of studs to a top and bottom plate, forming a wall framing. The top plate may be attached to a top joist and the bottom plate may be attached to a bottom joist using a number of structural connectors, one structural connector used for each connection between top/bottom plate, and joist. Further, the method may involve connecting a ceiling to a joist by attaching the connector to the joist, and then the attaching ceiling to the connector. Further still, a floor may be connected to a joist by attaching the connector to the joist, and then attaching the floor to the connector.

### BRIEF DESCRIPTION OF THE DRAWINGS

The embodiments shown in Figs. 1-11 and 15-20 are for illustration purposes only.
**FIG. 1** provides a top view of structural connector.
**FIG. 2** provides a side view of a structural connector.
**FIG. 3** provides a perspective view of an embodiment of a structural connector.
**FIG. 4** provides a perspective view of another sheet of a structural connector.
**FIG. 5** provides a perspective view of another sheet of a structural connector.
**FIG. 6** provides an elevation view of another sheet of a structural connector.
**FIG. 7** provides an elevation view of another sheet of a structural connector.
**FIG. 8** provides a perspective view of yet another structural connector.
**FIG. 9** provides a top view of yet still another structural connector.
**FIG. 10** provides a side view of yet still another structural connector.
**FIG. 11** provides a perspective view of yet still structural connector.
**FIG. 12** provides a cutaway view of a structure employing a plurality of the structural connectors.
**FIG. 13** provides a perspective view of the structural connector according to the invention.
**FIG. 14** provides an elevation view of the structural connector according to the invention.
**FIG. 15** provides an exploded view of yet another structural connector during its preparation.
**FIG. 16** provides a perspective view of a structural connector during its preparation.
**FIG. 17** provides a perspective view of a structural connector during preparation and the structure used therefor.
**FIG. 18** provides yet another structural connector, shown herein on a post.
**FIG. 19** provides a perspective view of a structural connector.
**FIG. 20** provides a perspective view of a structural connector.

### DETAILED DESCRIPTION

The detailed description set forth below in connection with the appended drawings is intended as a description of presently preferred embodiments of the invention and other embodiments for illustration purposes only and does not represent the only forms in which the present invention may be constructed and/or utilized. The description sets forth the functions and the sequence of steps for constructing and operating the invention in connection with the illustrated embodiments.

Generally, the present invention concerns a structure comprising a structural connector as described above comprising opposing sheets, and a vibration damping material joining the sheets. The structural connector is used to connect structural elements of buildings together, isolating the connector faces and limiting vibrations travelling between them.

The structural connectors may be used in soundproofing, which is indented herein to refer to not only full soundproofing, but also sound isolating, limiting, noise reduction, sound attenuation, vibration damping and vibration limiting.

The connectors may be used to join any building structural elements together. For example, the structural connector may be used to join: a floor element to a wall element, wall element to a beam, a column to a floor element, sheetrock furring to a wall element, a ceiling element to a floor element above, a stair stringer to a floor landing, door frame components to wall openings, noise generating mechanical equipment and piping to floors, walls, ceilings and roofs, a rafter to a stud, a rafter to a joist, roof connections, and the like. These building structural elements may be constructed of any material used in building structures, such as metal, wood, composites, or pre-fabricated panels.

The structural connectors are formed of two opposing sheets joined together by a vibration damping material. The opposing sheets may be constructed of any material suitable for connection of the structural elements. Examples of the sheet material may include metals such as steel, aluminum, stainless steel, and the like, wood, composites, and plastics materials, among others. Generally, the sheets will be separated by the vibration damping material, such that there is no rigid connection between them. The separation of the sheets by the vibration damping material functions to prevent or at least limit transmission of vibrations, such as sound, between the opposing sheets.

Each sheet may be shaped in any manner such that there is no rigid connection between them. In one embodiment, edges of the sheets may be bent inward, such that the bent portion extends towards the opposing sheet. In a further embodiment, portions of one or both of the sheets may extend away from the vibration damping material to facilitate connection, shaping, and the like. In one embodiment the extending portions of the sheet may have perforations to facilitate placement of fasteners for attachment of the connector to building elements and/or ease bending of the sheets.

One or a plurality of reinforcing structures may be attached to, or formed by, inner surfaces of a sheet. These reinforcing structures function to secure a connection between the sheets and the vibration damping material. The reinforcing structures may further prevent shearing and other deformation of the vibration damping material when under load. The reinforcing structure may be made of any material, including, but not limited to, metals, wood, composites plastics, or fibers.

In one embodiment, the reinforcing structure may be a reinforcing ladder. This ladder is formed as an elongated element aligned lengthwise or width-wise along an inner surface of one sheet. The elongated element is attached to the sheet by a plurality of rungs along the length of the element, thereby creating a ladder-shaped reinforcing structure.

In another embodiment, the reinforcing structure may be a T-shaped bracket along at least a part of a length or width of an inner surface of a sheet. The bottom of the T-shape being attached to the sheet. In a further embodiment, transverse protrusions may extend from the top of the T shape along its length, further reinforcing the structural connector. In yet a further embodiment, the T-shaped reinforcing structure may form one or a plurality of apertures along its surface.

In other embodiments, the reinforcing structures may be a bracket. The bracket may have any protrusion from the sheet of any shape capable of gripping and securing the sheet to the reinforcing material. For example, the reinforcing structures may be L shaped, I shaped, may have apertures along their lengths, may be hook shaped, and the like. In another embodiment, the sheets may be bent inward at their edges, the bent portions acting as reinforcing structures to hold in the vibration damping material. In some embodiments, a plurality of different reinforcing structures may be used on one structural connector.

In some embodiments, a quantity of mesh or netting may be disposed within the vibration damping material as reinforcement. In some embodiments the mesh or netting may be attached to one or both of the opposing sheets.

The vibration damping material may be any material capable of absorbing and dissipating vibrations, particularly sound vibrations. Further, in some embodiments, the vibration damping material must be capable of holding a weight of a building structural element under either a compression, pulling, or shearing force, without substantial distortion or deformation.

The vibration damping materials used in the invention is a visco-elastic material. Examples include silicone-based materials, rubbers, plastics, flexible epoxies, foam type materials, composites, and the like. In one embodiment, the vibration damping material may be capable of being in a fluid form which can later be cured or set, thereby aiding in the manufacture of the structural connectors. In a particular embodiment, the vibration damping material may be a silicone-based air-curable material.

An edge support may be disposed along an edge of the structural connector, particularly along edges wherein the vibration damping material is exposed. The edge support may prevent a deformation of the vibration damping material both outwardly and inwardly. Examples of edge supports may be a fiber mesh, a film adhered to the vibration damping material surface, strips of film, strips of fiber, and the like.

The structural connector may be made in any manner capable of creating the device having at least two opposing sheets connected by a vibration damping material with no rigid connection between the sheets. In one embodiment, a mold may be utilized to make the structural connector. The mold may be formed as a trough having a rectangular or approximately rectangular cross section and an open top. As such, the sheets may have rectangular flat portions to match one side of the mold. In the mold, sheets may be placed on opposing sides, with a gap between them. Next, the vibration damping material in liquid form may be poured into the mold between the sheets. The mold may have capped ends and a sealed bottom to prevent the liquid from escaping. Once the liquid vibration damping material is poured in and reaches a proper level, it may be allowed to set or cure into a solid state. Once the setting or curing is finished, the structural connector may be removed in one solid piece, the two sheets being connected together by the vibration damping material. In one embodiment, this solid piece may subsequently be cut into smaller pieces. Piece size cutting may be based on construction needs, the size of the structural elements being connected, and other building considerations.

In one embodiment of the structural connector in use, a connection between a joist and a wall assembly may involve the joist attached to a top wall plate by the structural connector. Two pieces of wood strapping, one on each side of the structural connector may be used to facilitate attachment of the connector to the joist and connector to the top wall plate. In other words, connection is from a wall top plate to the strapping, strapping to the connector, connector to another piece of strapping on the opposite sheet, and the strapping to a joist.

It should be understood that the structural connector described herein may also be used for any connection of two objects, not simply connection of building structural elements. For example, in one embodiment, the structural connector may be used as a raft connector. The raft connector may be positioned on a wall, ceiling, floor, or other surface and useable to connect items thereto. The items may be anything that would be desired to attach to a wall, ceiling or the like, such as HVAC equipment, cooking or bathroom exhaust equipment, loudspeakers, televisions, or appliances.

In another embodiment a plurality of structural connectors may be used to at least partially vibrationally isolate a room from the rest of the building. In this embodiment, numerous structural connector may be used, one between each structural element connecting the room to the remainder of the building. For example, a structural connector may be used at each connection point between a wall assembly and a floor assembly or floor rim joist, wall and ceiling assembly or ceiling rim joist, and wall corner connections. In a further embodiment, structural connectors may be used to attach wall studs to top and/or bottom plates. In yet other embodiments, a structural connector or a plurality of connectors may isolate a floor from a subfloor and/or a ceiling from a subfloor above the ceiling.

The room as described in this embodiment may be isolated from any direct structural connections between its structural elements and the structural elements of the remainder of the building. In further embodiments, each room may additionally utilize the structural connectors to further vibrationally isolate each room.

In embodiments of construction wherein pre-fabricated walls and floors are formed, a plurality of structural connectors may be used to connect the pre-fabricated walls and floors to each other and structural elements to which they are attached, such as foundation walls, beams and/or columns.

In another embodiment of a method the connectors in use involves a wall bottom plate being attached to the soundproofing structural connector noted above that is mounted to floor joists and/or rim board (such as a floor assembly). Similarly, a wall top plate may be attached to another soundproofing structural connector. In another embodiment, a wall bottom plate may be attached to connectors mounted on a wall top plate. In similar embodiments, a concrete or engineered panel floor slab may be attached to structural connectors mounted on the top or face of a wall. The walls in turn may be connected to other ceiling or floor slabs by the structural connectors. In yet another embodiment, elevated floor assemblies may be attached to subfloors by the structural connectors. In still another embodiment, stair stringers may be attached to connectors mounted on top and bottom floor landings by the structural connectors. In yet still another embodiment, gypsum wall and ceiling panels may be attached to furring strips which are attached to the structural connectors mounted on wall and/or ceiling structures. These wall and/or ceiling structures may be part of a new construction, or may be existing.

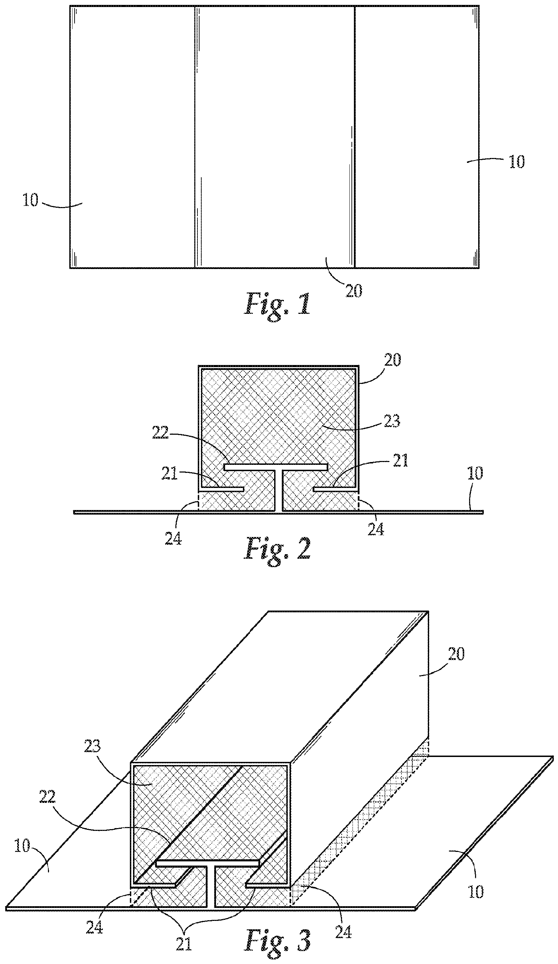

Turning now to Fig. 1 a top view of an illustrative embodiment of a structural connector is provided. The first sheet 10 and second sheet 20 are both visible, the first sheet 10 being wider than the second sheet 20 in this embodiment. The wider sheet 10 provides surfaces for fastening the connector a structural element. Isolated components are then fastened to the face of sheet 20.

Fig. 2 shows a cross sectional view of another illustrative embodiment of a structural connector. The second sheet 20 is positioned above the first sheet 10. The two sheets 10, 20 are joined by a vibration damping material 23 which fills in all space between the first and second sheet 10, 20. A portion of the vibration damping material 23 is exposed 24. A T-shaped reinforcing structure 22 extends from the first sheet. Further, the second sheet has an inwardly bent portion 21 that may further act as a reinforcing structure. The first sheet 10 has portions extending away from the vibration damping material 23 on both sides. The T-shaped reinforcing structure 22 and the inwardly bent portions 21 may serve to increase the surface area available for gripping the vibration damping material 23 and may also increase resistance to shear and compression.

Fig. 3 provides a perspective view of another illustrative embodiment of the structural connector. The second sheet 20 is positioned above the first sheet 10. The two sheets 10, 20 are joined by a vibration damping material 23 which fills in all space between the first and second sheet 10, 20. A portion of the vibration damping material 23 is exposed 24. A T-shaped reinforcing structure 22 extends from the first sheet. Further, the second sheet has an inwardly bent portion 21 that may further act as a reinforcing structure. The first sheet 10 has portions extending away from the vibration damping material 23 on both sides. These extended portions may be solid surfaced or perforated to accommodate field bending or fastener installation.

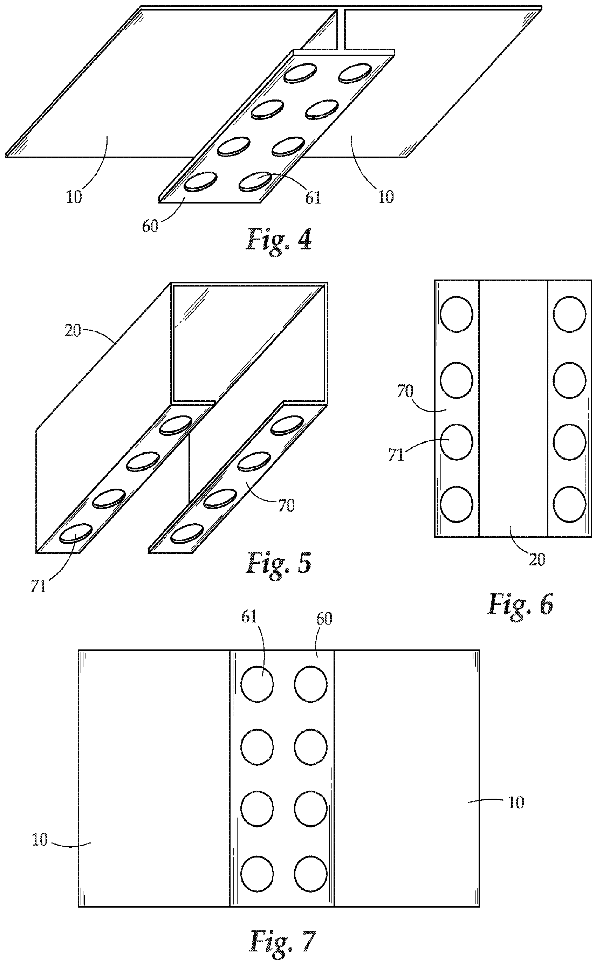

Fig. 4 provides a perspective view of an illustrative embodiment of a sheet. In this embodiment, the sheet 10 has a central T-shaped reinforcing structure 22 extending from its top surface. A top of the T shape 60 forms a plurality of apertures 61 through which vibration damping material (not shown) may pass, and bind to during the forming of the structural connector.

Fig. 5 provides a perspective view of an illustrative embodiment of a sheet. In this embodiment, the sheet 20 is 'C' shaped, having inwardly projecting portions 70. The inward projecting portions 70 form a plurality of apertures 71 through which vibration damping material (not shown) may pass, and bind to during the forming of the structural connector.

Fig. 6 provides a top view of an illustrative embodiment of sheet. In this embodiment, the sheet 20 is 'C' shaped, having inwardly projecting portions 70. The inward projecting portions 70 form a plurality of apertures 71 through which vibration damping material (not shown) may pass, and bind to during the forming of the structural connector.

Fig. 7 provides a top view of an illustrative embodiment of a sheet. In this embodiment, the sheet 10 has a central T-shaped reinforcing structure extending from its top surface. A top of the T shape 60 forms a plurality of apertures 61 through which vibration damping material (not shown) may pass, and bind to during the forming of the structural connector.

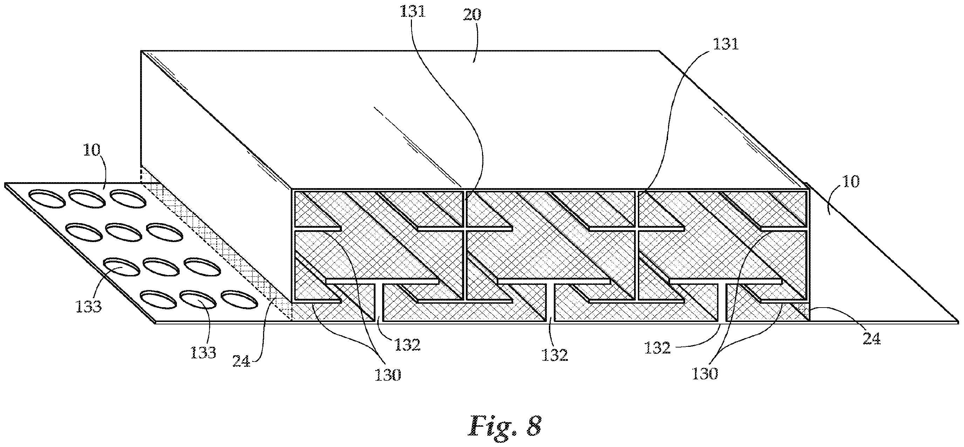

Fig. 8 provides a view of another illustrative embodiment of the structural connector and it's forming sheets. In this embodiment, the second sheet 20 is positioned above the first sheet 10. The two sheets 10, 20 are joined by a vibration damping material 23 which fills in all space between the first and second sheet 10, 20. A portion of the vibration damping material 23 is exposed 24. A plurality of T-shaped protrusions 132 extend from the first sheet 10. A plurality of stacked T-shaped protrusions 131 extend from the second sheet 20. In one embodiment, a portion of the first sheet 10 extends away from the vibration damping material 23. This portion defines a plurality of perforations 133 which may accommodate fasteners, may reduce the weight of the connector and/or make it easier bend and otherwise work with.

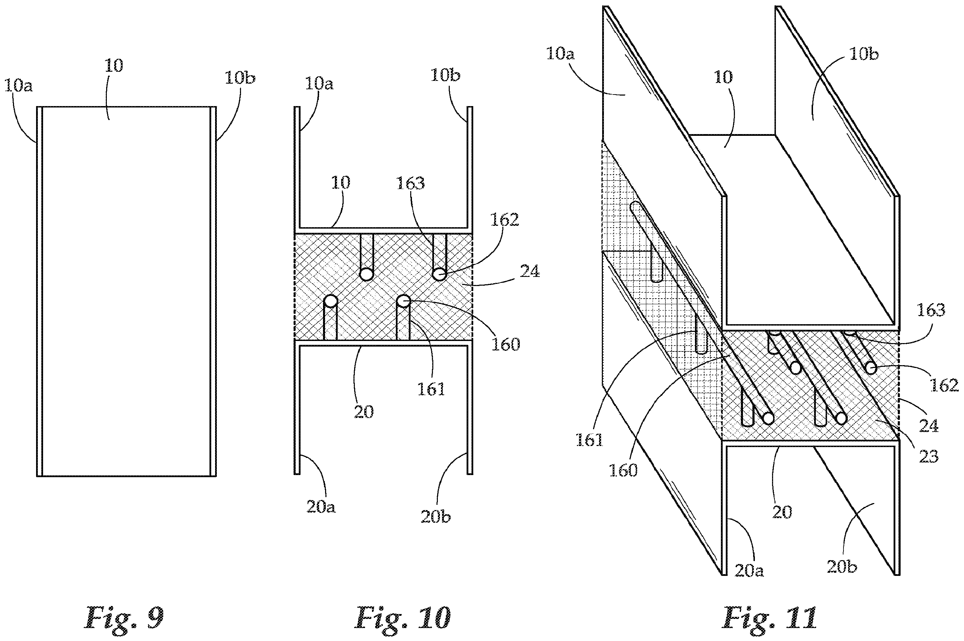

Figs. 9-11 provide views of yet another illustrative embodiment of the structural connectors. The first sheet 10 is positioned above the second sheet 20. The two sheets 10, 20 are joined by a vibration damping material 23 which fills in all space between the first and second sheet 10, 20. A portion of the vibration damping material 23 is exposed 24. The first sheet 10 has perpendicular portions 10a, 10b extending away from the vibration damping material 23. Similarly, the second sheet 20 has perpendicular portions 20a, 20b extending away from the vibration damping material 23. As such, the first and second sheet 10, 20 are formed roughly in a 'U' shape with a flat bottom. A plurality of reinforcing ladders extend from the first sheet and the second sheet. The reinforcing ladders comprise a elongate element 160 and 162 such as a wire, cable, bar, pipe or the like, and rungs 161 and 163 connecting it to the sheet 10 or 20. The element 160, 162 is oriented substantially parallel to a surface of the first sheet 10. The rungs 161, 163 extend perpendicularly from the element 160, 162 to the sheet 10, 20.

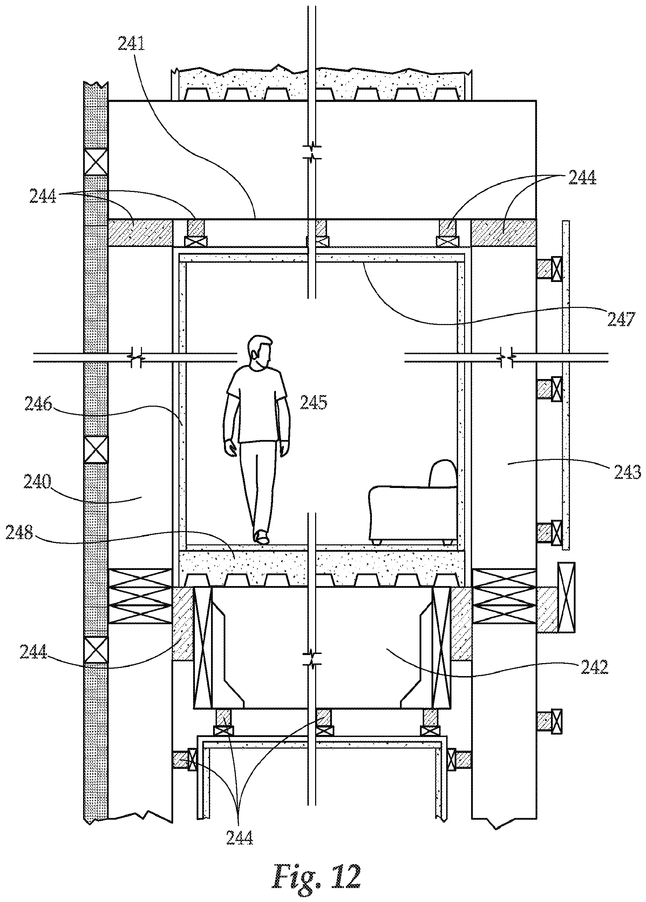

Fig. 12 provides a building cross sectional view showing a room isolated from rigid connection to the remainder of the building by the structural connectors described herein. A plurality of structural connectors 244 connect the room 245 and room elements to the studs 240, 243, and joists 241, 242. In particular, ceiling 247 is attached via structural connectors 244 to joist 241. This joist 241 is connected, using structural connectors 244, to a top plate attached to each of studs 240 and 243. Moreover, joist 242 is connected to a bottom plate attached to studs 240, or 243 by structural connectors 244. The floor 248 is connected directly to joist 242, however joist 242 is separated from the studs 240, 243 and their bottom plates by the structural connectors. Walls 246 are shown here directly connected to the studs 240, 243, the studs then being isolated from direct connection from joists 241, 242 by the structural connectors 244. In an alternative embodiment, the walls 246 may be connected to the studs 240, 243 by a structural connector 244.

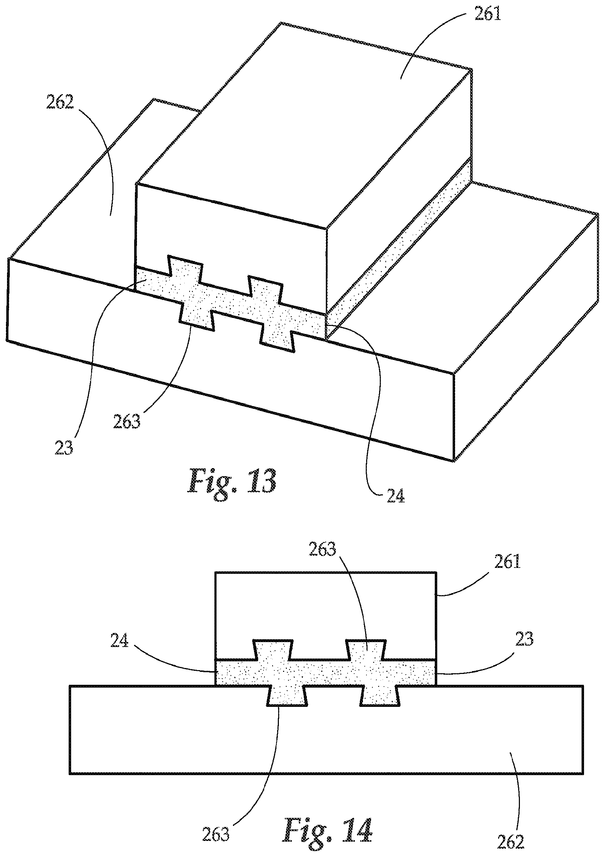

Figs. 13 and 14 provide a view of the structural connector of the invention. In this embodiment, first and second sheets 261, 262 are joined together by a vibration damping material 23. In this embodiment, the first and second sheets 261, 261 are formed as blocks. These blocks may be made of any material capable of being joined and used as a structural connector. For example, the blocks may be formed of wood, either solid wood or ply-wood, plastic, metal, composite materials, and the like. Channels 263 extend at least partially into the first and second sheets 261, 262 and are reinforcing structures for the structural connector. The channel 263 is formed as a dovetail channel, and has an expanding width as it approaches the opposite edge of the sheet 261, 262. In some such embodiments, this structure may aid in securing the sheets 261, 262, together. The channels are shaped to help anchor the opposing sheets 261, 262 to the vibration damping material 23.

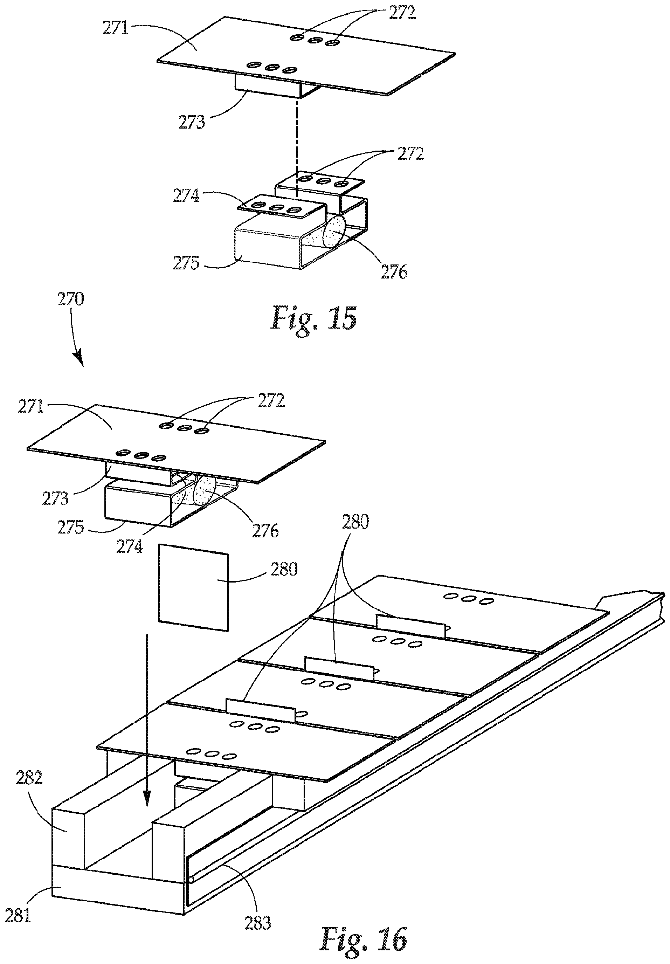

Fig. 15 provides an exploded view of an illustrative embodiment of the structural connector during its preparation and manufacture. First sheet 271 comprises a flanged reinforcing structure 273, as well as a plurality of holes 272 in the top, as well as the reinforcing structure (not shown). These holes allow introduction of the liquefied vibration damping material (not shown) and also provide a surface for the vibration damping material to form into and around, securing the first and second sheets 271, 275 together. The second sheet 275 is also formed with a reinforcing structure 274. This structure has holes 272 similar to those of the first sheet 271. A spacer 276 is placed in the second sheet 275 so that when the liquefied vibration damping material is introduced, it will not flow out of the area where the reinforcing structures 273, 274 are joined by the material.

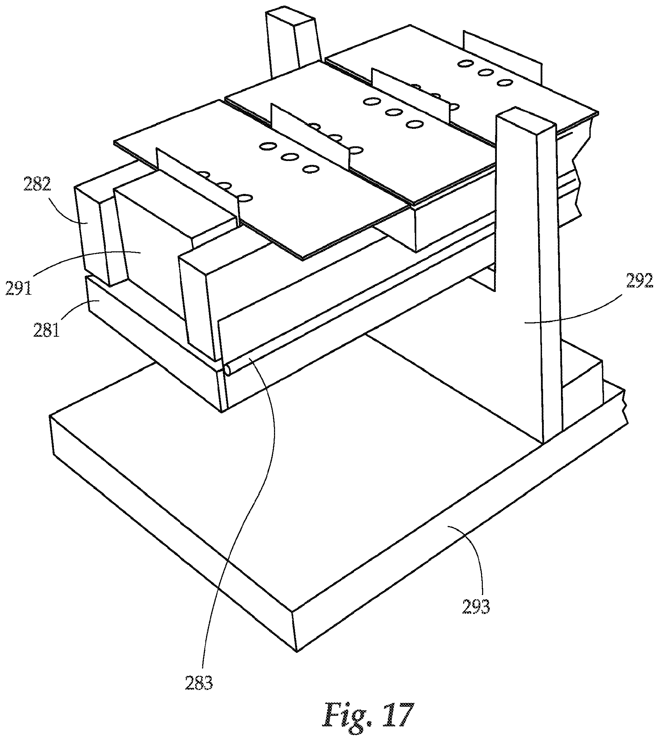

Figs. 16-17 provide views of an illustrative embodiment of preparation and manufacture of a structural connector. The structural connector framework 270 has first and second sheets 271, 275 interlocked via their reinforcing structures 273, 274. A spacer 276 is positioned on the second sheet 275. This connector framework 270 may then be positioned in a rack having a base 281, and side-walls 282 which may be hingedly connected to the base by hinge 283. The framework 270 may be placed next to a plurality of other frameworks 270 in the same rack structure. Once placed therein, a liquefied vibration damping material may be introduced to each framework 270, preferably through holes 272. A sheet 280 may be placed between the adjacent frameworks 270 to prevent the vibration damping material from spilling and interacting with the adjacent frameworks 270. Further, the side walls 282 and/or first sheets 271 may be held in place using uprights 292 connected to support 293. An end block 291 may be positioned on a last framework 270 on a row to hold it in place.

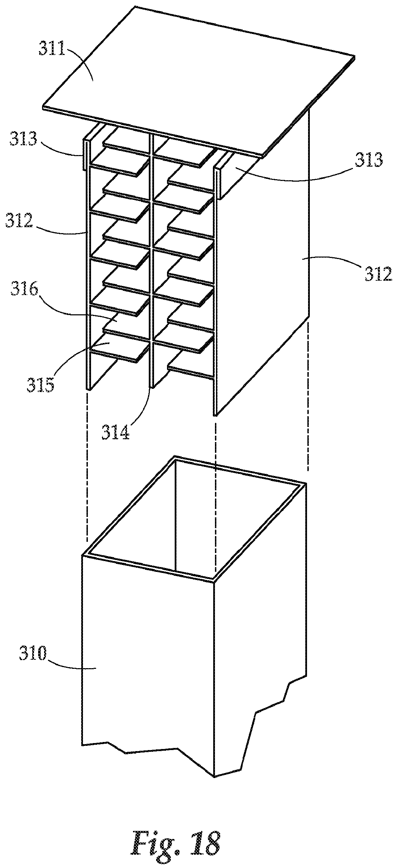

Fig. 18 provides yet another illustrative embodiment of a structural connector, shown herein on a post. The post base 310 may be any structural post, column, or the like that is vertically oriented and configured to bear a load and be connected to something on its top. The structural connector is configured to connect to a top and/or side of the post 310 and absorb vibrations. Two opposing sheets 312 have projecting reinforcing structures 315 extending from their inner faces. These are spaced between an interior sheet 314 having projecting reinforcing structures 316. The inner sheet 314 is connected to a load bearing top face 311. A vibration damping material joins them together and isolates them from a direct connection. A plurality of these reinforcing structures 315, 316 may be used to accommodate for varying sized loads. Each opposing sheet has a connector 313 that is sized and configured to hook over a top of the hollow post 310, rest on a top edge, or similarly connect. However, it should be understood that any equivalent connector structure may be used without straying from the scope of this invention. The opposing sheets 312 are sized to slide within the hollow post 310.

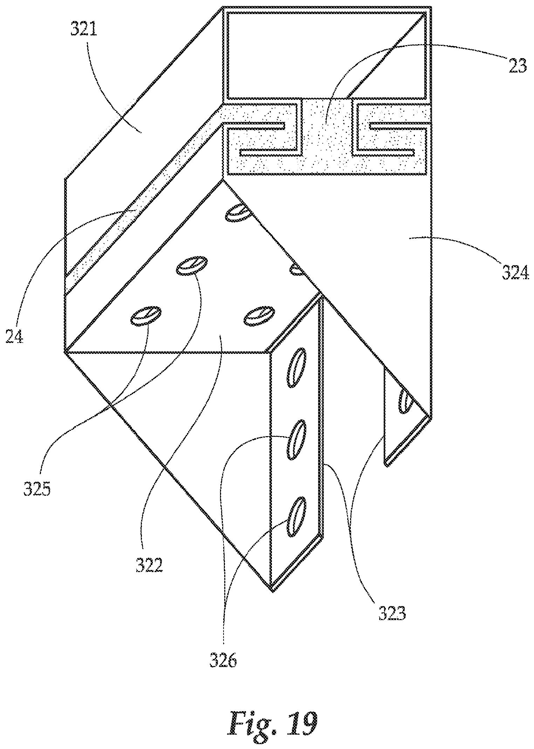

Fig. 19 provides a perspective view of still yet another illustrative embodiment of a structural connector. The second sheet 321 is positioned above the first sheet 322. The two sheets 321, 322 are joined by a vibration damping material 23 which fills in space between the first and second sheet 322, 321 when in an interlocking but non-contacting position. A portion of the vibration damping material 23 is exposed 24. A reinforcing structure extends from the first and second sheets 322, 321 into the vibration damping material 23. The first sheet 322 defines a plurality of holes 325 into which the vibration damping material 23 may enter. Generally, the holes may be sealed by a thin material preventing the vibration damping material from leaking out if/when in a liquid form. First sheet further comprises extensions 323 that extend away from the sheet and the second sheet 321. Extensions 323 define apertures 326 which may be used for attachment to a solid surface such as a stud or the like. Reinforcing wings 324 extend from the extensions 323 and join to the opposite edge of the first sheet 322.

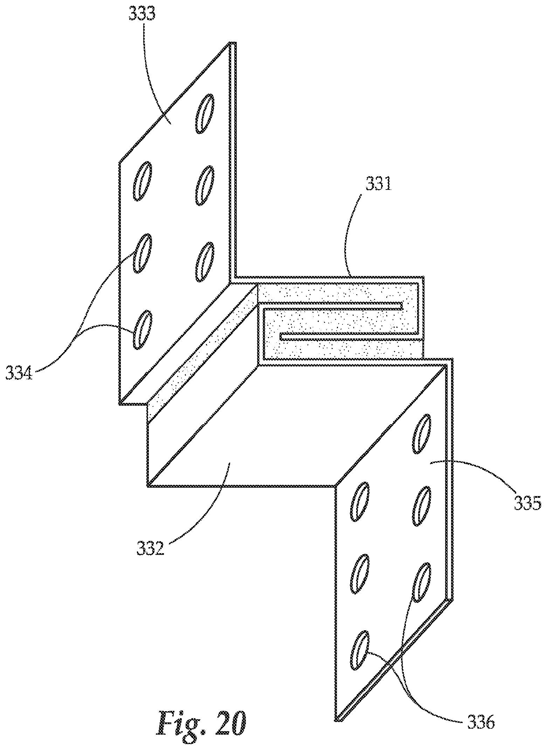

Fig. 20 provides a perspective view of still yet another illustrative embodiment of a structural connector. The second sheet 331 is positioned above the first sheet 332. The two sheets 321, 322 are joined by a vibration damping material 23 which fills in space between the first and second sheet 332, 331 when in an interlocking but non-contacting position. A portion of the vibration damping material 23 is exposed 24. A reinforcing structure extends from the first and second sheets 322, 321 into the vibration damping material 23. First sheet 332 further comprises extension 335 that extend away from the sheet and the second sheet 321. Extension 323 define apertures 335 which may be used for attachment to a solid surface such as a stud or the like. Similarly, second sheet 331 comprises extension 333 which defines apertures 334.

While several variations of the present invention have been illustrated by way of example in preferred or particular embodiments, it is apparent that further embodiments could be developed within the scope of the present invention, as defined in the appended claims.

## Claims

1. A structure comprising:
a first structural element;
a second structural element;
a sound-attenuating structural connector (244) comprising:
a first sheet (261);
a second sheet (262) opposing the first sheet (261), an inner surface of the second sheet (262) spaced apart from an inner surface of the first sheet (261), the inner surface of the second sheet (262) facing the inner surface of the first sheet (261); and
a solid piece of visco-elastic sound-attenuating vibration damping material (23) joining the first sheet (261) and the second sheet (262), such that no part of the first sheet (261) is in contact with the second sheet (262), the vibration damping material (23) extending along the inner surface of the first sheet (261);
wherein the first sheet (261) further comprises an extended portion extending away from the vibration damping material (23) along a plane parallel to the lateral plane of the vibration damping material (23);
the first sheet (261) attached to the first structural element by a fastener connected to the extended portion; and
the second sheet (262) attached to the second structural element,
**characterised in that** a plurality of channels (23) extends into the inner surface of each of the first sheet (261) and second sheet (262),
wherein the vibration damping material (23) extends into each channel (263), wherein the sheets (261,262) do not form any mutually interlocking structures, and
wherein opposing channels (263) are partially aligned and are formed as dovetail channels.

2. The structure according to claim 1, **characterised in that** the first and second sheet (261,262) are wooden blocks.

3. The structure according to claim 2, **characterised in that** the wooden blocks (261,262) are formed of a plywood.

4. The structure according to any one of the preceding claims, **characterised in that** the length of the first sheet (261) is greater than the length of the second sheet (262).

5. The structure according to any one of the preceding claims, **characterised in that** the first structural element is a building joist (241) connected to the first sheet (261).

6. The structure according to any one of the preceding claims, **characterised in that** the first structural element is a wall assembly connected to the first sheet (261).

7. The structure according to any one of the preceding claims, **characterised in that** the first structural element is a stud (240) of a wall assembly connected to the first sheet (261).

8. The structure according to any one of the preceding claims, **characterised in that** the first structural element is one of: a floor element, a wall element, a beam, a column, a furring strip, a ceiling element, a stair stringer, a floor landing, a door frame component, a wall opening, a piping, a roof element, a rafter, a stud, a joist, roof connections, and a plate of a wall assembly.

9. The structure according to claim 8, **characterised in that** the second structural element is one of: a floor element, a wall element, a beam, a column, a furring strip, a ceiling element, a stair stringer, a floor landing, a door frame component, a wall opening, a piping, a roof element, a rafter, a stud, a joist, roof connections, and a plate of a wall assembly.

10. The structure according to any one of the preceding claims, **characterised in that** the extended portion of the first sheet (261) extends away from a first side of the vibration damping material (23), and wherein the first sheet (261) further comprises a second extended portion extending away from a second side of the vibration damping material (23).

## Patentansprüche

1. Struktur, die Folgendes umfasst:
ein erstes Strukturelement;
ein zweites Strukturelement;
einen schalldämpfenden Strukturverbinder (244), der Folgendes umfasst:
eine erste Platte (261);
eine zweite Platte (262), die der ersten Platte (261) gegenüberliegt, eine Innenfläche der zweiten Platte (262), die von einer Innenfläche der ersten Platte (261) abgetrennt ist und die Innenfläche der zweiten Platte (262), die der Innenfläche der ersten Platte (261) zugewandt ist; und
ein festes Stück eines viskoelastischen schalldämpfenden schwingungsdämpfenden Materials (23), das die erste Platte (261) und die zweite Platte (262) verbindet, so dass kein Teil der ersten Platte (261) in Kontakt mit der zweiten Platte (262) ist, wobei sich das schwingungsdämpfende Material (23) entlang der Innenfläche der ersten Platte (261) erstreckt; und
wobei die erste Platte (261) ferner einen verlängerten Abschnitt aufweist, der sich von dem schwingungsdämpfenden Material (23) entlang einer Ebene parallel zu der seitlichen Ebene des schwingungsdämpfenden Materials (23) erstreckt;
die erste Platte (261) an dem ersten Strukturelement durch ein Befestigungselement befestigt ist, das mit dem verlängerten Abschnitt verbunden ist; und
die zweite Platte (262), die an dem zweiten Strukturelement befestigt ist,
**dadurch gekennzeichnet, dass** sich eine Vielzahl von Kanälen (23) in die Innenfläche sowohl der ersten Platte (261) als auch der zweiten Platte (262) erstreckt, wobei das schwingungsdämpfende Material (23) in jeden Kanal (263) reicht,
wobei die Platten (261, 262) keine gegenseitig ineinandergreifenden Strukturen bilden, und
wobei die gegenüberliegenden Kanäle (263) teilweise aufeinander ausgerichtet und als Schwalbenschwanzkanäle ausgebildet sind.

2. Struktur nach Anspruch 1, **dadurch gekennzeichnet, dass** die erste und zweite Platte (261, 262) Holzklötze sind.

3. Struktur nach Anspruch 2, **dadurch gekennzeichnet, dass** die Holzklötze (261, 262) aus Sperrholz geformt werden.

4. Struktur nach einem der vorhergehenden Ansprüche, **dadurch gekennzeichnet, dass** die Länge der ersten Platte (261) größer ist als die Länge der zweiten Platte (262).

5. Struktur nach einem der vorhergehenden Ansprüche, **dadurch gekennzeichnet, dass** das erste Strukturelement ein mit der ersten Platte (261) verbundener Balken (241) ist.

6. Struktur nach einem der vorhergehenden Ansprüche, **dadurch gekennzeichnet, dass** das erste Strukturelement eine an der Wand montierte Baugruppe ist, die mit der ersten Platte (261) verbunden ist.

7. Struktur nach einem der vorhergehenden Ansprüche, **dadurch gekennzeichnet, dass** das erste Strukturelement ein Bolzen (240) einer an der Wand montierten Baugruppe ist, die mit der ersten Platte (261) verbunden ist.

8. Struktur nach einem der vorhergehenden Ansprüche, **dadurch gekennzeichnet, dass** das erste Strukturelement eines der folgenden ist: ein Fußbodenelement, ein Wandelement, ein Balken, eine Säule, eine Unterkonstruktion, ein Deckenelement, eine Treppenwange, ein Fußbodenpodest, ein Türrahmenelement, eine Wandöffnung, eine Rohrleitung, ein Dachelement, ein Sparren, ein Bolzen, ein Balken, Dachanschlüsse und eine Platte einer Wandanordnung.

9. Struktur nach Anspruch 8, **dadurch gekennzeichnet, dass** das zweite Strukturelement eines der folgenden ist: ein Fußbodenelement, ein Wandelement, ein Balken, eine Säule, eine Unterkonstruktion, ein Deckenelement, eine Treppenwange, ein Fußbodenpodest, eine Türrahmenkomponente, eine Wandöffnung, eine Rohrleitung, ein Dachelement, ein Sparren, ein Bolzen, ein Balken, Dachanschlüsse und eine Platte einer an der Wand montierten Baugruppe.

10. Struktur nach einem der vorhergehenden Ansprüche, **dadurch gekennzeichnet, dass** sich der verlängerte Abschnitt der ersten Platte (261) von einer ersten Seite des schwingungsdämpfenden Materials (23) weg erstreckt, und wobei die erste Platte (261) ferner einen zweiten verlängerten Abschnitt umfasst, der sich von einer zweiten Seite des schwingungsdämpfenden Materials (23) weg erstreckt.

## Revendications

1. Structure comprenant :
un premier élément structurel ;
un second élément structurel ;
un connecteur structurel atténuant le son (244) comprenant :
une première feuille (261) ;
une seconde feuille (262) opposée à la première feuille (261), une surface intérieure de la seconde feuille (262) espacée d'une surface intérieure de la première feuille (261), la surface intérieure de la seconde feuille (262) faisant face à la surface intérieure de la première feuille (261) ; et
un morceau solide de matériau viscoélastique amortisseur de vibrations atténuant le son (23) joignant la première feuille (261) et la seconde feuille (262), de sorte qu'aucune partie de la première feuille (261) n'entre en contact avec la seconde feuille (262), le matériau amortisseur de vibrations (23) s'étendant le long de la surface intérieure de la première feuille (261) ;
dans laquelle la première feuille (261) comprend en outre une partie étendue s'étendant depuis le matériau amortisseur de vibrations (23) le long d'un plan parallèle au plan latéral du matériau amortisseur de vibrations (23) ;
la première feuille (261) fixée au premier élément structurel par une fixation reliée à la partie étendue ; et
la seconde feuille (262) fixée au second élément structurel,
**caractérisée en ce qu'**une pluralité de canaux (23) s'étend dans la surface intérieure de chacune de la première feuille (261) et de la seconde feuille (262),
dans laquelle le matériau amortisseur de vibrations (23) s'étend dans chaque canal (263),
dans laquelle les feuilles (261, 262) ne forment pas de structures d'interverrouillage réciproques, et
dans laquelle des canaux opposés (263) sont partiellement alignés et sont formés comme des canaux en queue d'aronde.

2. Structure selon la revendication 1, **caractérisée en ce que** la première et la seconde feuille (261, 262) sont des blocs de bois.

3. Structure selon la revendication 2, **caractérisée en ce que** les blocs de bois (261, 262) sont formés en contreplaqué.

4. Structure selon l'une quelconque des revendications précédentes, **caractérisée en ce que** la longueur de la première feuille (261) est supérieure à la longueur de la seconde feuille (262).

5. Structure selon l'une quelconque des revendications précédentes, **caractérisée en ce que** le premier élément structurel est une poutre de construction (241) raccordée à la première feuille (261).

6. Structure selon l'une quelconque des revendications précédentes, **caractérisée en ce que** le premier élément structurel est un ensemble de paroi raccordé à la première feuille (261).

7. Structure selon l'une quelconque des revendications précédentes, **caractérisée en ce que** le premier élément structurel est un poteau (240) d'un ensemble de paroi raccordé à la première feuille (261).

8. Structure selon l'une quelconque des revendications précédentes, **caractérisée en ce que** le premier élément structurel est un élément parmi : un élément de plancher, un élément de paroi, une poutre, une colonne, un couvre-joint, un élément de plafond, un limon d'escalier, un palier, un composant de cadre de porte, une ouverture de paroi, une conduite, un élément de toit, un chevron, un poteau, des raccords de toit, et une plaque d'un ensemble de paroi.

9. Structure selon la revendication 8, **caractérisée en ce que** le second élément structurel est un élément parmi : un élément de plancher, un élément de paroi, une poutre, une colonne, un couvre-joint, un élément de plafond, un limon d'escalier, un palier, un composant de cadre de porte, une ouverture de paroi, une conduite, un élément de toit, un chevron, un poteau, des raccords de toit, et une plaque d'un ensemble de paroi.

10. Structure selon l'une quelconque des revendications précédentes, **caractérisée en ce que** la partie étendue de la première feuille (261) s'étend depuis un premier côté du matériau amortisseur de vibrations (23), et dans laquelle la première feuille (261) comprend en outre une seconde partie étendue s'étendant depuis un second côté du matériau amortisseur de vibrations (23).
